Europäisches Patentamt

European Patent Office

Office européen des brevets

(11) Publication number:

**0 121 988**

**B1**

(12) **EUROPEAN PATENT SPECIFICATION**

(45) Date of publication of patent specification: **20.04.88**

(21) Application number: **84300771.7**

(22) Date of filing: **07.02.84**

(51) Int. Cl.⁴: **G 02 B 6/38**

(54) Article for and method of joining optical fibres.

(30) Priority: **10.02.83 US 465362**

(43) Date of publication of application:
**17.10.84 Bulletin 84/42**

(45) Publication of the grant of the patent:
**20.04.88 Bulletin 88/16**

(84) Designated Contracting States:
**AT BE CH DE FR IT LI NL SE**

(56) References cited:
**EP-A-0 063 954**
**DE-A-2 901 918**
**FR-A-2 412 863**

**Patent Abstracts of Japan vol. 6, no. 116, 29
June 1982 & JP-A-57-45511**

(73) Proprietor: **RAYCHEM CORPORATION (a
California corporation)
300 Constitution Drive
Menlo Park California 94025 (US)**

(72) Inventor: **Myers, David R.
831, North Elcamino Real NBR 4
San Mateo California 94401 (US)**
Inventor: **Moyer, Wendell William
43, Adam Way
Atherton California 94025 (US)**
Inventor: **David E. Jones
304-87 Graduate House
Pasadena California 91126 (US)**

(74) Representative: **Jones, David Colin et al
Raychem Limited Intellectual Property Law
Department Swan House 37-39 High Holborn
London WC1 (GB)**

Courier Press, Leamington Spa, England.

## Description

This invention relates to the joining of optical fibers, and particularly though not exclusively to the adhesive joining of optical fibers which have been optically aligned.

In UK Patent Application Publication No. 2100463, the disclosure of which is incorporated herein by reference, there is disclosed a technique for the adhesive joining of optical fibers. The fibers are butted end-to-end within a tube containing index-matching adhesive, optically aligned by measuring the light intensity passing from one fiber to the other and maximizing that intensity, and the adhesive is then caused to harden. A preferred adhesive is a photopolymerizable adhesive, i.e. one that will harden on exposure to ultraviolet light.

It has now been discovered, however, that shrinkage and flow of the adhesive as it sets tend to cause a loss of orientation of the fiber ends with respect to each other, which may result in an unacceptably high loss at the joint. (Fusion joining can produce losses as low as less than 0.1 dB, and for telecommunication fibers a loss less than 0.3 dB and preferably as low as 0.1 dB is considered desirable.) This adverse effect is a consequence of the adhesive being in a tube: polymerization of a drop of adhesive between two fiber ends but otherwise unconstrained does not cause a problem. However, in a tube, the surface interface between the adhesive and the tube inner wall restricts the freedom of the adhesive to shrink without coming under stress. Eventually the stress is relieved by cracking or void formation in the adhesive, flow of the adhesive, or separation at an adhesive surface.

Because the fibers are flexible, it is not believed possible to rely on simply holding the fibers to prevent their movement: although the parts which are held remain still, the forces exerted on the ends by the shrinking adhesive are quite sufficient to cause relative movement.

It has been proposed in British Published Patent Application No. 2,039,379A, the disclosure of which is incorporated herein by reference, to "zone cure" a photopolymerizable adhesive about an optical fiber which is to be aligned with a lens. This zone curing comprises first curing the adhesive adjacent the lens and the end of the fiber, and then curing the remaining adhesive by gradually exposing it to light. The technique proposed in that Application relies on the ability to symmetrically cure the adhesive about the fiber end to avoid loss of alignment.

U.S. Patent No. 4,201,618 (Lewis) discloses an apparatus designed to achieve the symmetric curing of a photopolymerizable adhesive used to join the ends of optical fibers. The adhesive is contemplated as being unconstrained (not in a tube), and a uniformly stressed bonded connection is said to be formed.

It is an object of the present invention to provide an article and a method whereby an improved joint between the ends of two optical fibers may be obtained.

In accordance with one aspect of the present invention, there is provided an article suitable for joining the ends of two optical fibers (20) which comprises:

(a) a tubular, straight container which has an open or closed, circular or other shaped, cross-section, which has two open ends to receive the optical fibers and which is of such cross-section as to allow adequate movement of the fibers during alignment; and

(b) a hardenable, fluid, index matched adhesive (13) disposed within the container for receiving and joining together optical fibers (20),

wherein the inner surface of the container (20), is

(i) coated with a release agent (12) which lowers the adhesion between the surface on which it is coated and another material with which that surface comes into contact, so that the other material may separate from the surface; and/or

(ii) is composed of an inherently releasing material having an adhesive bond strength between it and the index matched adhesive, which is less than the cohesive bond strength of the index matched adhesive.

In accordance with a second aspect of the present invention, there is provided a method of adhesively joining two optical fibers which comprises:

(a) introducing the ends of the fibers into respective open ends of a tubular, straight container having an open or closed, circular or other shaped cross-section which is of such dimensions as to allow adequate movement of the fibers during alignment, and containing hardenable, fluid, index matched adhesive, wherein the inner surface of the container is:

(i) coated with a release agent which lowers the adhesion between the surface on which it is coated and another material with which that surface comes into contact, so that the other material may separate from the surface, and/or

(ii) is composed of an inherently releasing material having an adhesive bond strength between it and the index matched adhesive, which is less that the cohesive bond strength of the index matched adhesive;

(b) aligning the ends of the fibers within the adhesive; and

(c) causing the adhesive to harden, thereby joining the fibers.

The container may have a smallest internal cross-sectional dimension of at least $1.5 \times 10^{-4}$ m, and a largest internal cross-sectional dimension less than $3 \times 10^{-3}$ m.

The alignment technique employed in the method of the invention may be, for example, optical alignment, by which is meant the use of the technique disclosed in UK Patent Application Publication No. 2100463; or visual alignment, where the positions of the fiber ends are observed with a microscope and they are moved into axially aligned, abutting relationship.

The technique for joining the aligned fibers uses a hardenable, fluid, index-matching adhesive to the ends of the aligned fibers. Preferably the adhesive is polymerizable (this term being used to include adhesives which can be further polymerized or cross-linked). The adhesive may be self-setting (e.g. a two-component epoxy or cyanoacrylate adhesive) but is preferably one which polymerizes only when exposed to selected treatment after the fibers have been aligned. Particularly useful are photopolymerizable adhesives which can be cured by exposure to UV light, for example a photo-initiated urethane/acrylate adhesive. Other hardenable adhesives can be used, however. The hardened adhesive will be transparent to radiation of at least one of the wavelengths used as a signal in optical fibers (typically 810—860, 1280—1320 and 1450—1550 nanometers).

Preferably the adhesive immediately adjacent the ends of the fibers is hardened, and subsequently the remainder of the adhesive is hardened.

Where the fibers to be joined comprise both a core and a cladding up to their ends which are to be joined, the hardened adhesive will usually have a refractive index which is not substantially less than that of the core, i.e. at least 1.4, preferably at least 1.45. However, where plastic-clad fibers are to be joined and the optical cladding is stripped back from the ends, the refractive index of the adhesive will preferably be identical or very close to that of the cladding.

The article may comprise means for supplying adhesive to the container.

The article of the invention comprises a quantity of index-matching adhesive.

The index-matching adhesive may lie within the container, and may provide the only content of the container. The adhesive may be retained within the container by surface tension forces.

The container is preferably a tube having a circular cross-section, but it can also be a tube having a different closed cross-section, or an open trough or another form of container which will contain and retain the adhesive; all such containers are included by the term "generally tubular container" as used herein. If the container is stored with the adhesive therein, it can if desired be fitted with removable end caps which seal its open ends thus keeping the adhesive clean and, if necessary, preventing it from leaking out of the container.

The adhesive may alternatively be retained in, for example, a small polymeric bulb attached (or capable of attachment) to one of the ends of the container, and be dispensed into the container when the container is to be used. This offers particular advantage if a two-component adhesive is used, since a two-part bulb may be employed.

The hardenable adhesive used preferably has a viscosity such that it is retained in the container at 23°C with the container horizontal, and more preferably under all other conditions likely to be encountered before the adhesive is hardened. On the other hand, its viscosity should not be such that it is difficult to insert and move the optical fibers under the joining conditions. We prefer to use an adhesive having a viscosity of 750 to 3000 centipoise (1 centipoise = $10^{-3}$ newton seconds per square meter), particularly 1200 to 2500 centipoise, e.g. about 2200 centipoise (viscosities referred to herein are measured at 23°C using a Model HBT Brookfield Viscometer, Spindle No. SC4-27 rotating at 100 rpm).

The length of the container overall should be sufficient to allow a strong adhesive joint to be formed, for example at least 5 mm, and is preferably less than about 25 mm, as an excessively long tube makes alignment of the fiber ends difficult. A preferred length range is 10 to 20 mm.

The container should be of such cross-section as to allow adequate movement of the fibers during the alignment process and is preferably at least 1.2 times, e.g. 1.6 times, especially 3 times the external diameter of the fiber. Thus, for example, fibers may conveniently be joined within a container having an internal cross-sectional dimension of from 150 to 3000 microns, preferably 400 to 2000 microns, and especially 750 to 1500 microns.

The container may be composed of, for example, quartz, glass, metal, or a polymeric composition, provided that it permits (and is not damaged by) the desired process for hardening the adhesive. When the preferred photopolymerizable adhesive is used, the container should be UV-transparent.

By a release agent is meant an agent which lowers the adhesion between the surface on which it is coated and another material (in this case, the adhesive) with which that surface comes into contact, so that the other material may separate from the surface. Release agents are typically polymers of low surface energy, such as fluoropolymers or silicones, and be solids or liquids (e.g. oils). They may be conveniently coated on a surface in liquid form (either, for example, as a solution in a solvent which later evaporates or as a curable release agent, which is coated in uncured form and then cured).

Exemplary release agents which have been found useful in this invention are fluoropolymer (e.g. PTFE) dispersions, curable silicones (e.g. polydimethyl siloxanes), and silicone oils (e.g. low molecular weight polydimethyl siloxanes) of moderate viscosity (e.g. 5000 to 12500 centipoise). Because it has been found for this purpose that curable silicones are not as effective release agents as oils, but oils tend to migrate and have short shelf lives, a particularly useful release agent is a mixture of a curable silicone with a silicone oil, in a ratio of from 10:90 to 90:10, preferably 30:70 to 40:60 parts by weight.

By an inherently releasing material is meant a material of low surface energy such that the adhesive bond strength of the bond between it and an adhesive is less than the cohesive bond strength of the adhesive.

Typical inherently releasing materials are polymers of low surface energy. Since it may be convenient to make the entire container from the inherently releasing material, fluoropolymers such as PTFE which are difficult to mold may be less suitable than materials such as, for example, poly(4-methyl pentene-1), which is a preferred material for manufacture of the entire container.

Since the adhesive is desirably chosen to have a greater adhesive bond strength to the fibers than cohesive bond strength, to prevent separation from the fibers, the provision of a release agent or an inherently releasing material will tend to ensure that the adhesive separates from the container wall on shrinkage, rather than forming voids or separating from the fibers.

The materials discussed above are particularly useful when photopolymerizable acrylate adhesives are used to join the fibers, but it will be a matter of routine experimentation for a person of ordinary skill in the art, having regard to this specification, to determine suitable release agents or inherently releasing materials for a particular adhesive.

An article for and method of joining two optical fibers, each in accordance with the present invention, will now be described, by way of example, with reference to the accompanying drawing, in which:

Figure 1 shows the article in longitudinal section; and

Figure 2 shows the article of Figure 1 in use to make the joint.

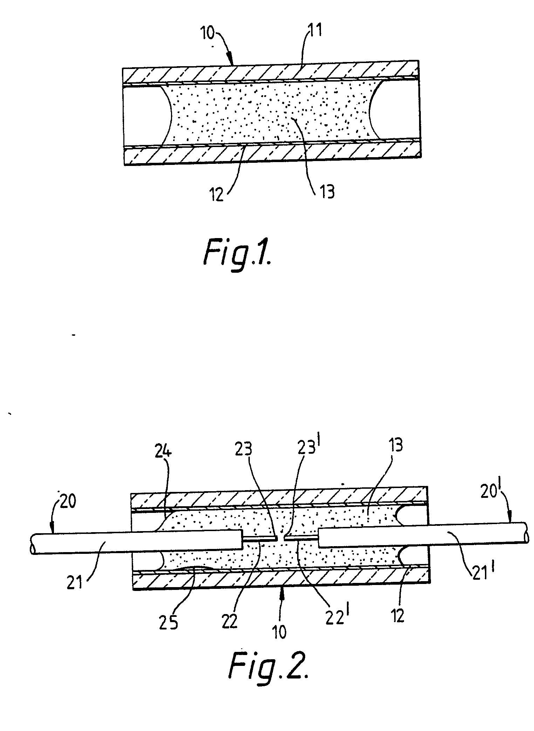

Referring to Figure 1, the container of the article, shown generally at 10, is composed of a wall material 11 and the inner surface of the container is coated with a release agent 12. A quantity of index-matching adhesive 13 is shown within the container.

Figure 2 illustrates the container of Figure 1 in use to make an adhesive joint between the buffers 21 and 21' of two optical fibers, shown generally at 20 and 20', which have been cut back, exposing the glass fibers 22 and 22'. The fibers are inserted into the container 10 so that the ends 23 and 23' of the fibers are almost abutting near the center of the container. The fibers are then aligned (by means not illustrated here), and the index-matching adhesive 13 is caused to harden to make the joint. The purpose of the release agent 12 is seen when the adhesive shrinks. Because of the release agent 12, the adhesive tends to separate from the container walls, as shown schematically at 24 and 25, rather than separating from the fibers or forming voids.

In an alternative embodiment, which is not shown, at least the inner surface of the container is composed of an inherently releasing material. When the container is used in the manner shown in Figure 2, the same advantages as are provided by the release agent shown in that Figure are obtained.

Example

An apparatus generally as described in UK Patent Application Publication No. 2100463 was used to join two identical optical fibers. The fibers (which are available from Corning Glass) consisted of a glass core of diameter 50 microns, a glass cladding of outside diameter 125 microns, and a polyacrylate buffer of outer diameter 250 microns. The buffer was stripped from the fiber ends and the stripped fiber ends cleaved to provide clean end surfaces about 3 mm from the end of the buffer. The fibers were then inserted into an article according to this invention. The article, which was a straight annulus of quartz, length 12.7 mm and internal diameter 1000 microns, was coated with a release agent comprising 50% by weight of a curable silicone (96% Sylgard 7044 resin, 4% Sylgard 7048 catalyst) with 50% by weight of a silicone oil of viscosity 5000 centipoise. The article contained a UV-polymerizable adhesive having a refractive index (when cured) of about 1.49, which adhesive comprised a mixture of about 3 parts by weight of trimethylolpropane triacrylate and 1 part by weight of a urethane/acrylate oligomer (Uvethane 788 from Thiokol) with a small quantity of a photoinitiator. The adhesive had a viscosity (uncured) of about 2200 centipoise.

The fibers were inserted into the adhesive-filled container such that the stripped ends almost touched near the center of the tube and were then precisely aligned. The adhesive was then cured in a two-stage zone cure in which (1) a length of 1 mm about the ends of the fibers was exposed to the lamp, and (2) the rest of the container was exposed.

An excellent splice could be reproducibly prepared.

**Claims**

1. An article (10) suitable for joining the ends of two optical fibers (20) which comprises:

(a) a tubular, straight container which has an open or closed, circular or other shaped, cross-section, which has two open ends to receive the optical fibers and which is of such cross-section as to allow adequate movement of the fibers during alignment; and

(b) a hardenable, fluid, index matched adhesive (13) disposed within the container for receiving and joining together optical fibers (20), wherein the inner surface of the container (20), is

(i) coated with a release agent (12) which lowers the adhesion between the surface on which it is coated and another material with which that surface comes into contact, so that the other material may separate from the surface; and/or

(ii) is composed of an inherently releasing material having an adhesive bond strength between it and the index matched adhesive, which is less than the cohesive bond strength of the index matched adhesive.

2. An article according to claim 1, wherein the container is composed of glass.

3. An article according to claim 1 or 2, wherein the release agent (12) comprises a fluoropolymer, or a silicone oil, or a silicone oil and a cured silicone.

4. An article according to any preceding claim, wherein substantially the whole of the container is composed of an inherently releasing material.

5. An article according to any preceding claim, wherein the inherently releasing material comprises a polymer.

6. An article according to claim 5, wherein the polymer comprises poly(4-methyl pentene-1), or a fluoropolymer.

7. An article according to any preceding claim, wherein the quantity of index-matching adhesive lies within the container, provides the only content of the container, and which is retained in the container by surface tension forces.

8. An article according to claim 6 or 7, wherein the adhesive (13) is photopolymerizable.

9. An article according to any preceding claim, which has a circular cross-section.

10. A method of adhesively joining two optical fibers (20) which comprises:

(a) introducing the ends (23) of the fibers (20) into respective open ends of a tubular, straight container having an open or closed, circular or other shaped cross-section which is of such dimensions as to allow adequate movement of the fibers during alignment, and containing hardenable, fluid, index-matched adhesive (13) wherein the inner surface of the container (20) is:

(i) coated with a release agent (12) which lowers the adhesion between the surface on which it is coated and another material with which that surface comes into contact, so that the other material may separate from the surface, and/or

(ii) is composed of an inherently releasing material having an adhesive bond strength between it and the index-matched adhesive, which is less than the cohesive bond strength of the index-matched adhesive;

(b) aligning the ends (23) of the fibers within the adhesive; and

(c) causing the adhesive (13) to harden, thereby joining the fibers.

11. A method according to claim 11, wherein the adhesive (13) is photopolymerizable and step (b) comprises exposing the adhesive (13) to ultraviolet light.

12. A method according to claim 10 or 11, wherein step (b) comprises:

(i) causing the adhesive (13) immediately adjacent the fiber ends to harden; and

(ii) subsequently causing the remainder of the adhesive (13) to harden.

13. A joint between two optical fibers which has been made by the method of any of claims 10 to 12.

**Patentansprüche**

1. Gegenstand (10), der zur Spleißung der Enden von zwei Lichtleitfasern (20) geeignet ist, welcher aufweist:

(a) einen rohrförmigen, geraden Behälter, der einen offenen oder geschlossenen, kreisförmigen oder anderweitig geformten Querschnitt hat, der zwei offene Enden zur Aufnahme der Lichtleitfasern hat und der einen solchen Querschnitt hat, daß eine entsprechende Bewegung der Fasern während der Ausrichtung möglich ist, und

(b) einen härtbaren, fluiden, indexabgestimmten Kleber (13), der in dem Behälter zur Aufnahme und zum Verspleißen der Lichtleitfasern (20) miteinander angeordnet ist,

bei dem die innere Fläche des Behälter (20)

(i) mit einem Trennmittel (12) beschichtet ist, das die Haftung zwischen der Fläche, auf der es aufgetragen ist, und einem weiteren Material herabsetzt, mit dem diese Fläche in Kontakt kommt, so daß das andere Material sich von der Fläche trennen läßt und/oder

(ii) aus einem inhärent trennendem Material besteht, das eine adhäsive Haftfestigkeit zwischen ihm und dem indexabgestimmten Kleber hat, das kleiner als die kohäsive Haftfestigkeit des indexabgestimmten Klebers ist.

2. Gegenstand nach Anspruch 1, bei dem der Behälter aus Glas besteht.

3. Gegenstand nach Anspruch 1 oder 2, bei dem das Trennmittel (12) ein Fluorpolymer oder ein Silikonöl oder ein Silikonöl und ein gehärtetes Silikon aufweist.

4. Gegenstand nach einem der voranghenden Ansprüche, bei dem im wesentlichen der gesamte Behälter aus einem inhärent trennendem Material besteht.

5. Gegenstand nach einem der vorangehenden Ansprüche, bei dem das inhärent trennende Material ein Polymer aufweist.

6. Gegenstand nach Anspruch 5, bei dem das Polymer Poly(4-methylpenten-1-) oder ein Fluorpolymer aufweist.

7. Gegenstand nach einem der vorangehenden Ansprüche, bei dem die Menge des indexabgestimmten Klebers innerhalb des Behälters liegt, der einzige Inhalt des Behälters ist und der im Behälter durch Oberflächenspannungskräfte gehalten ist.

8. Gegenstand nach Anspruch 6 oder 7, bei dem der Kleber (13) photopolymerisierbar ist.

9. Gegenstand nach einem der vorangehenden Ansprüche, der einen kreisförmigen Querschnitt hat.

10. Verfahren zum adhäsiven Spleißen zweier Lichtleitfasern (20), das aufweist:

(a) Einführen der Enden (23) der Lichtleitfasern (20) in die zugeordneten offenen Enden eines rohrförmigen, geraden Behälters, der einen offenen oder geschlossenen, kreisförmigen oder anderweitig ausgebildeten Querschnitt hat, der solche Abmessungen besitzt, daß eine entsprechende Bewegung der Fasern während des Ausrichtens möglich ist, und der einen härtbaren, fluiden, indexabgestimmten Kleber (13) enthält, wobei die Innenfläche des Behälters (20):

(i) mit einem Trennmittel (12) beschichtet ist, das die Adhäsion zwischen der Fläche, auf der es aufgebracht ist, und einem weiteren Material mit dem diese Fläche in Kontakt kommt, herabsetzt, so daß das andere Material sich von der Fläche trennen läßt, und/oder

(ii) aus einem inhärent trennendem Material besteht, das eine adhäsive Hartfestigkeit zwischen diesem und dem indexabgestimmten Kleber hat, das kleiner als die kohäsive Haftfestigkeit des indexabgestimmten Klebers ist,

(b) Ausrichten der Enden (23) der Fasern in dem Kleber, und

(c) Bewirken, daß der Kleber (13) aushärtet, um hierdurch die Fasern zu verbinden.

11. Verfahren nach Anspruch 10, bei dem der Kleber (13) photopolymerisierbar ist und der Schritt (b) die Bestrahlung des Klebers (13) mit ultraviolettem Licht aufweist.

12. Verfahren nach Anspruch 10 oder 11, bei dem der Schritt (b) aufweist:

(i) Härten des Klebers (13) unmittelbar den Faserenden benachbart, und

(ii) anschließendes Härten des restlichen Klebers (13).

13. Verbindung zwischen zwei Lichtleitfasern, die gemäß dem Verfahren nach einem der Ansprüche 10 bis 12 hergestellt ist.

**Revendications**

1. Article (10) convenant à la jonction des extrémités de deux fibres optiques (20), qui comprend:

(a) un conteneur tubulaire droit, qui présente une section transversale ouverte ou fermée, circulaire ou d'une autre forme, qui présente deux extrémités ouvertes destinées à recevoir les fibres optiques, et qui est d'une section transversale telle qu'elle permet un mouvement approprié des fibres pendant l'alignement; et

(b) un adhésif fluide durcissable (13), adapté en indice, disposé dans le conteneur afin de recevoir et de joindre les fibres optiques (20) l'une à l'autre,

dans lequel la surface intérieure du conteneur (20) est

(i) revêtue d'un agent de séparation (12) qui abaisse l'adhérence entre la surface sur laquelle il est appliqué et une autre matière avec laquelle cette surface entre en contact, afin que l'autre matière puisse être séparée de la surface; et/ou

(ii) composée d'une matière apte naturellement à la séparation, ayant une force de liaison adhésive entre elle et l'adhésif adapté en indice, qui est inférieure à la force de liaison cohésive de l'adhésif adapté en indice.

2. Article selon la revendication 1, dans lequel le conteneur est composé de verre.

3. Article selon la revendication 1 ou 2, dans lequel l'agent de séparation (12) comprend un fluoropolymère, ou une huile de silicone, ou une huile de silicone et une silicone durcie.

4. Article selon l'une quelconque des revendications précédentes, dans lequel pratiquement la totalité du conteneur est composée d'une matière apte naturellement à la séparation.

5. Article selon l'une quelconque des revendications précédentes, dans lequel la matière apte naturellement à la séparation comprend un polymère.

6. Article selon la revendication 5, dans lequel le polymère comprend du poly(4-méthylpentène-1) ou un fluoropolymère.

7. Article selon l'une quelconque des revendications précédentes, dans lequel la quantité d'adhésif d'apaptation d'indice s'étend à l'intérieur du conteneur, constitue le seul contenu du conteneur et est retenue dans le conteneur par des forces de tension superficielle.

8. Article selon la revendication 6 ou 7, dans lequel l'adhésif (13) est photopolymérisable.

9. Article selon l'une quelconque des revendications précédentes, qui présente une section transversale circulaire.

10. Procédé de jonction par collage de deux fibres optiques (20), qui consiste:

(a) à introduire les extrémités (23) des fibres (20) dans les extrémités ouvertes respectives d'un conteneur tubulaire droit présentant une section transversale ouverte ou fermée, circulaire ou d'une autre forme, qui est de dimensions telles qu'elles permettent un mouvement approprié des fibres pendant l'alignement, et contenant un adhésif fluide durcissable (13), adapté en indice, dans lequel la surface intérieure du conteneur (20) est:

(i) revêtue d'un agent (12) de séparation qui abaisse l'adhérence entre la surface sur laquelle il est appliqué et une autre matière avec laquelle cette surface vient en contact, afin que l'autre matière puisse être séparée de la surface et/ou

(ii) composée d'une matière apte naturellement à la séparation, ayant une force de liaison adhésive entre elle et l'adhésif adapté en indice, qui est inférieure à la force de liaison cohésive de l'adhésif adapté en indice;

(b) à aligner les extrémités (23) des fibres à l'intérieur de l'adhésif; et

(c) à faire durcir l'adhésif (13) pour joindre ainsi les fibres.

11. Procédé selon la revendication 10, dans lequel l'adhésif (13) est photopolymérisable et l'étape (b) consiste à exposer l'adhésif (13) à une lumière ultraviolette.

12. Procédé selon la revendication 10 ou 11, dans lequel l'étape (b) consiste:

(i) à faire durcir l'adhésif (13) immédiatement adjacent aux extrémités des fibres; et

(ii) à faire durcir ensuite la partie restante de l'adhésif (13).

13. Joint entre deux fibres optiques, réalisé par le procédé de l'une quelconque des revendications 10 à 12.

Fig.1.

Fig.2.